# EUROPEAN PATENT APPLICATION

(11) **EP 4 768 861 A1**
(43) Date of publication of application: **01.07.2026**
(21) Application number: 24867364.2
(22) Date of filing: 13.09.2024
(51) Int. Cl.: G01C 21/20

(54) **METHOD FOR ADJUSTING MOVEMENT PATH, AND TERMINAL DEVICE AND MEDIUM**

(30) Priority: 21.09.2023 CN 202311219629
(71) Applicant: Shenzhen Mammotion Innovation Co., Limited, Shenzhen, Guangdong 518000 (CN)
(72) Inventor: WEI, Jidong, Shenzhen, Guangdong 518000 (CN); CHEN, Jianlin, Shenzhen, Guangdong 518000 (CN)
(74) Representative: Huang, Liwei
(86) International application number: PCT/CN2024/118736
(87) International publication number: WO 2025/060955

(57) **Abstract**

A method for adjusting movement path, a terminal device, and a medium is provided. The method comprising: displaying an operation interface, wherein the operation interface is provided with a work area indicator, an initial path preview indicator, and a trajectory adjustment indicator; receiving trigger information generated based on an external object performing a preset trigger operation on the trajectory adjustment indicator, adjusting the initial path preview indicator based on the trigger information to obtain a target path preview indicator, and displaying the target path preview indicator on the operation interface; and generating a movement path of a mobile robot corresponding to the target path preview indicator.

## Description

This application claims priority to Chinese Patent Application No. 202311219629.0, filed with the Chinese Patent Office on September 21, 2023, and entitled "Method for adjusting movement path, terminal device and medium", the entire content of which is incorporated herein by reference

### TECHNICAL FIELD

This disclosure relates to the field of path planning, and particularly to a method for adjusting movement path, a terminal device, and a medium.

### BACKGROUND

With continuous progress of science and technology and rapid development of artificial intelligence, automated and intelligent mobile robots are being increasingly applied in various fields. Robotic technologies have been continuously explored and applied in industries such as manufacturing, services, healthcare, and education, enabling robots to perform complex, repetitive, or labor-intensive tasks over extended periods of time.

However, various configuration issues still exist when using mobile robots, which reduce the working efficiency of the mobile robots. Taking a lawn mower as an example, in the prior art, when planning a path for performing a mowing task, adjustments often need to be performed in multiple steps. For example, path parameters are first set, and a preview path is then generated according to the set parameters, so that a user can determine whether the preview path meets the requirements. During this process, the parameters need to be repeatedly adjusted to generate corresponding preview paths. Therefore, when planning a complex path, data needs to be repeatedly transmitted and processed to generate the preview paths, which consumes a large amount of time and seriously affects working efficiency.

### SUMMARY

Embodiments of the present disclosure provide a method for adjusting a movement path, a terminal device, and a storage medium, which address issues in existing path planning technologies in which planning a movement path for a mobile robot typically requires step-by-step adjustments. During the path generation process, data may need to be repeatedly transmitted, which consumes a significant amount of time and may significantly reduce the operational efficiency of the robot.

In a first aspect, embodiments of this disclosure provide a method for adjusting movement path, the method comprising:
displaying an operation interface, wherein the operation interface is provided with a work area indicator, an initial path preview indicator, and a trajectory adjustment indicator;
receiving trigger information generated in response to a preset trigger operation performed by an external object on the trajectory adjustment indicator, adjusting the initial path preview indicator based on the trigger information to obtain a target path preview indicator, and displaying the target path preview indicator on the operation interface; and
generating a movement path of a mobile robot corresponding to the target path preview indicator.

In a second aspect, embodiments of this disclosure further provide a terminal device. The terminal device comprising a processor, a memory, a computer program stored on the memory and executable by the processor, and a data bus configured to implement connection and communication between the processor and the memory. The computer program, when executed by the processor, may implement steps of the method for adjusting a movement path provided in this disclosure.

In a third aspect, embodiments of this disclosure further provide a non-transitory computer readable storage medium storing one or more programs. The one or more programs are executable by one or more processors to implement steps of the method for adjusting a movement path provided in this disclosure.

Embodiments of this disclosure provide a method for adjusting movement path, a terminal device, and a medium, wherein the method comprising: displaying an operation interface, wherein the operation interface is provided with a work area indicator, an initial path preview indicator, and a trajectory adjustment indicator; further receiving trigger information generated based on an external object performing a preset trigger operation on the trajectory adjustment indicator, adjusting the initial path preview indicator based on the trigger information to obtain a target path preview indicator, and displaying the target path preview indicator on the operation interface; and thereby generating a movement path of a mobile robot corresponding to the target path preview indicator. The method for adjusting movement path can quickly implement angle adjustment in a drag-and-drop manner, and simultaneously generate and display a corresponding preview path. This saves computing power for continuously generating movement paths during angle adjustment, and improves path planning efficiency. Furthermore, the method for adjusting movement path enables users to instantly preview path adjustment effects during adjustment, realizing visibility of path adjustment, and further improving user experience and path planning efficiency.

### BRIEF DESCRIPTION OF THE DRAWINGS

To describe the technical solutions of embodiments of this disclosure more clearly, the following briefly introduces the accompanying drawings required for describing the embodiments. Apparently, the accompanying drawings in the following description show merely some embodiments of this disclosure, and a person of ordinary skill in the art may still derive other accompanying drawings from these accompanying drawings without creative efforts.
FIG.1 is a schematic flowchart of a method for adjusting movement path according to an embodiment of the present disclosure;
FIG.2 is a schematic diagram of an operation interface according to an embodiment of the present disclosure;
FIG.3 is another schematic diagram of an operation interface according to an embodiment of the present disclosure;
FIG.4 is a schematic diagram in which a target path preview indicator is a bow-shaped path according to an embodiment of the present disclosure;
FIG.5 is a schematic diagram in which a target path preview indicator is a loop-shaped path according to an embodiment of the present disclosure;
FIG.6 is another schematic diagram in which a target path preview indicator is a loop path preview indicator according to an embodiment of the present disclosure;
FIG.7 is a schematic use diagram when a target operation mode is a repeated traversal mode according to an embodiment of the present disclosure;
FIG.8 is a schematic scenario diagram when a trajectory adjustment indicator overlaps with a function indicator according to an embodiment of the present disclosure;
FIG.9 is a corresponding schematic diagram of processing results when a trajectory adjustment indicator overlaps with a function indicator according to an embodiment of the present disclosure;
FIG.10 is a schematic structural block diagram of a terminal device according to an embodiment of the present disclosure.

### DESCRIPTION OF EMBODIMENTS

Technical solutions in embodiments of this disclosure will be clearly and completely described below in conjunction with the accompanying drawings in the embodiments of this disclosure. Apparently, the described embodiments are a part of the embodiments of this disclosure, not all of them. Based on the embodiments in this disclosure, all other embodiments obtained by a person of ordinary skill in the art without creative efforts shall fall within the protection scope of this disclosure.

The flowcharts shown in the accompanying drawings are merely illustrative, and do not necessarily include all contents and operations/steps, nor are they necessarily executed in the described order. For example, some operations/steps may be decomposed, combined or partially merged, so an actual execution order may change according to actual applications.

It should be understood that terms used in the description of this disclosure are merely for a purpose of describing specific embodiments and are not intended to limit this disclosure. As used in the description and appended claims of this disclosure, singular forms "a", "an", and "the" are intended to include plural forms, unless the context clearly indicates otherwise.

Embodiments of this disclosure provide a method for adjusting movement path, a terminal device, and a medium. The method for adjusting movement path may be applied to the terminal device, which can be an electronic device such as a tablet computer, a notebook computer, a desktop computer, a personal digital assistant, and a wearable device.

Some embodiments of this disclosure are described in detail below with reference to the accompanying drawings. Without conflict, the following embodiments and features in the embodiments can be combined with each other.

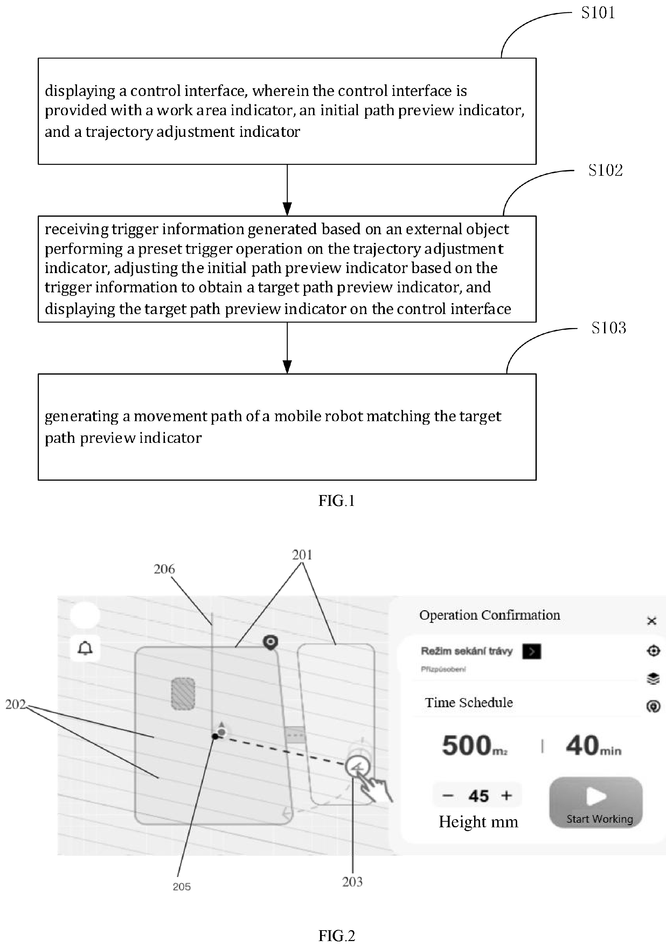

Referring to FIG.1, FIG.1 is a schematic flowchart of a method for adjusting movement path according to an embodiment of the present disclosure.

As shown in FIG.1, the method for adjusting movement path comprising steps S101 to S103.

Step S101, displaying an operation interface, wherein the operation interface is provided with a work area indicator, an initial path preview indicator, and a trajectory adjustment indicator.

Exemplarily, as shown in FIG.2, the work area indicator 201 is configured to indicate a range of a work area of a path to be planned.

The initial path preview indicator 202 is configured to preview and display a movement path of a mobile robot. The initial path preview indicator intersects a boundary of the work area indicator, and at least two intersection points exist, so that the initial path preview indicator can cross the work area indicator.

The initial path preview indicator may comprising at least one line pattern, and the line pattern may be a straight line or a curve, or any user-defined pattern, such as "A", "S", and etc. A preset angle relationship and a preset position relationship exist among a plurality of line patterns, for example, a parallel relationship with a 1-centimeter interval among a plurality of straight line patterns, or an end-to-end arrangement among a plurality of "S" pattern lines, and the like.

Optionally, in response to the initial path preview indicator comprising at least two line patterns, a range covered by the initial path preview indicator partially overlaps with the work area indicator at least, thereby better previewing and displaying the subsequently generated movement path corresponding to the path preview indicator, and improving visibility and user experience.

The trajectory adjustment indicator 203 is configured to adjust the previewed and displayed movement path, to obtain a target path preview indicator.

Optionally, the operation interface is displayed in the terminal device or a display module of an autonomous mobile device.

In some embodiments, before the displaying the operation interface, the method further comprising: determining a target work area of the mobile robot, and generating the operation interface corresponding to the target work area, wherein the work area indicator is generated based on the target work area.

Exemplarily, the target work area of the mobile robot is determined based on tasks to be completed by the mobile robot, that is, map information corresponding to the tasks to be completed by the mobile robot is determined, to generate a work area indicator corresponding to the mobile robot based on the target work area and generate an adapted operation interface. The target work area may include a plurality of work areas, and the adapted operation interface is generated based on the plurality of work areas. When obtaining the operation interface, a corresponding visual range of the operation interface may be adjusted based on an area size or a concentration degree corresponding to the work areas, to improve user experience.

For example, the tasks to be completed by the mobile robot are respectively a task a and a task b, a work area corresponding to the task a is map information map1, and a work area corresponding to the task b is map information map2. In response to shapes of the map1 and the map2 being different, a generated work area indicator style corresponding to the task a and a generated work area indicator style corresponding to the task b are different, thereby displaying different styles on the operation interface, as shown in FIG.2.

In addition, when the operation interface is relatively small, showing the work area indicator corresponding to the task a and the work area indicator corresponding to the task b to a user at the same time may affect user experience, displaying adjustments can then be made based on area sizes corresponding to the task a and the task b. For example, a work area indicator corresponding to a task with a larger area is preferentially displayed, and a work area indicator corresponding to a task with a smaller area can be further displayed to the user after adjusting a dragging interface.

Or, in response to a plurality of tasks, an area with relatively concentrated task distribution is preferentially displayed. For example, the task a, the task b, and a task c are concentrated in an area A, and a task d and a task e are distributed in an area B. At this time, the operation interface preferentially displays work area indicators corresponding to the task a, the task b, and the task c, while work area indicators corresponding to the task d and the task e can be further displayed to the user after being adjusted through a dragging interface.

Therefore, when displaying the operation interface, corresponding operation interfaces can be displayed based on a distribution state of the target work area. In response to a small number of target work areas, the operation interface can display all the target work areas. In response to a plurality of target work areas, a corresponding target work area can be preferentially displayed based on area information or centralized distribution area information corresponding to the target work areas. Thus, while ensuring user experience, users are prioritized to obtain more information, achieving an improved visibility effect.

Step S102, receiving the trigger information generated based on the external object performing the preset trigger operation on the trajectory adjustment indicator, adjusting the initial path preview indicator based on the trigger information to obtain the target path preview indicator, and displaying the target path preview indicator on the operation interface.

Exemplarily, the preset trigger operation comprising dragging, single-clicking, double-clicking, and the like. An external object uses the preset trigger operation to adjust position information corresponding to the trajectory adjustment indicator, and trigger information corresponding to the trajectory adjustment indicator is generated based on the position information, thereby adjusting the initial path preview indicator based on the trigger information to obtain the target path preview indicator.

Exemplarily, during the process of adjusting the initial path preview indicator based on the trigger information, continuously updated initial path preview indicators during the adjustment process may be displayed in real time, or the adjusted target path preview indicator may be directly displayed.

It should be understood that the target path preview indicator in embodiments of this disclosure is obtained by adjusting the initial path preview indicator, maintaining a certain commonality in their displays on the operation interface. For example, line patterns are the same, and attributes of the line indicators may be the same or different. Exemplarily, the display of the initial path preview indicator and the target path preview indicator can involve a change from a dashed line to a solid line, a color change, a shade change of a same color, and etc., to improve visibility.

In some embodiments, the adjusting the initial path preview indicator based on the trigger information to obtain the target path preview indicator comprising: determining relative position information between the trajectory adjustment indicator and a preset reference position based on the trigger information; adjusting the initial path preview indicator based on the relative position information, to obtain the target path preview indicator.

Exemplarily, the preset reference position is set in the operation interface, wherein the preset reference position serves as a reference for calculating the trajectory adjustment Indicator. A coordinate system is established with the preset reference position, coordinate information of the trajectory adjustment indicator in the coordinate system is determined by the trigger information, relative position information between the trajectory adjustment indicator and the preset reference position is determined by using the coordinate information, and finally the initial path preview indicator is adjusted by using the relative position information to obtain the target path preview indicator.

For example, as shown in FIG.2, taking a center position 205 of the operation interface as the preset reference position, a coordinate system is established with a straight upward direction of a straight line 206 where the center position is located as a positive direction of a y-axis, and a right direction perpendicular to the y-axis as an x-axis. A vector between the trajectory adjustment indicator and an origin of the coordinate system is determined as the relative position information by the trigger information, to adjust the initial path preview indicator by using the vector to obtain the target path preview indicator.

In some embodiments, the relative position information comprising angle information, and the determining the relative position information between the trajectory adjustment indicator and the preset reference position based on the trigger information comprising: determining a target position corresponding to the trigger information, and determining a connection line based on the target position and the preset reference position; calculating an included angle between the connection line and a target reference line, and determining the angle information between the trajectory adjustment indicator and the preset reference position based on the included angle.

Exemplarily, a target position of the trajectory adjustment indicator in the coordinate system corresponding to the preset reference position is determined based on the trigger information, the target position and the preset reference position are connected with a line to obtain the connection line, and a coordinate axis of the coordinate system is used as the target reference line, to calculate an included angle between the connection line and the coordinate axis, and further determine the angle information between the trajectory adjustment indicator and the preset reference position based on the included angle.

For example, the target reference line is the positive direction of the y-axis, and in response to the target position corresponding to the trajectory adjustment indicator being in the positive direction of the y-axis, the angle information between the trajectory adjustment indicator and the preset reference position is 0 degree. As the trajectory adjustment indicator moves clockwise from the y-axis, the angle information between the trajectory adjustment indicator and the preset reference position sequentially increases from 0 degree, varying in a range of 0-359 degrees.

Optionally, the connection line between the target position and the preset reference position may or may not be displayed in the operation interface, which can be configured based on requirements.

Optionally, the coordinate system may or may not be displayed in the operation interface, which can be configured based on requirements.

In some embodiments, the preset reference position is a center position of the work area indicator, or the preset reference position is a center position of the operation interface.

Exemplarily, the work area indicator displays map information of an operating range of the mobile robot, to use a center position corresponding to the map information as the preset reference position. Alternatively, a center position of the operation interface is used as the preset reference position.

For example, the center position of an overall map corresponding to the map information showing the operating range of the mobile robot in the work area indicator is taken as the preset reference position, so that an identical preset reference position is kept even if the work area indicator is updated. This allows the user to quickly get accustomed to adjustment force, and reduces user learning cost.

Alternatively, different preset reference positions are determined based on different work area indicators. For example, in response to a target area indicator comprising a plurality of tasks, taking the center position of the operation interface as the preset reference position leads to a corresponding change in the preset reference position after a task is updated. At this time, the user can know an approximate position corresponding to the preset reference position, and therefore the user can perform a fast adjustment according to a desired angle.

In addition, in response to a plurality of tasks, the preset reference position may be determined in an area with a relatively centralized task distribution, so as to accommodate a plurality of work area indicators, improving adjustment efficiency and adjustment experience.

In some embodiments, the adjusting the initial path preview indicator based on the relative position information, to obtain the target path preview indicator comprising: in response to a cumulative change of the angle information in the same direction being greater than or equal to 360 degrees, determining that the target path preview indicator is a loop-shaped path preview indicator.

Exemplarily, in response to the user continuously adjusting the initial path preview indicator in a same direction, and returning a cumulative change value of angle information greater than or equal to 360 degrees, the target path preview indicator is changed from a bow-shaped path preview indicator to a loop-shaped path preview indicator. That is, in a same target work area, in response to the cumulative change value being less than 360 degrees, a style corresponding to the target path preview indicator is the bow-shaped path preview indicator; and in response to the cumulative change value being greater than or equal to 360 degrees, the style corresponding to the target path preview indicator is the loop-shaped path preview indicator.

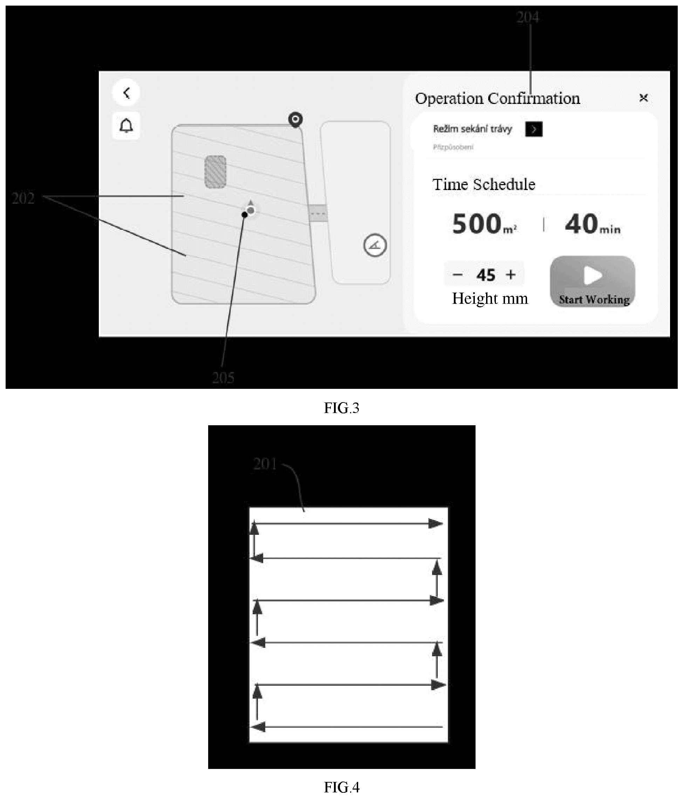

The bow-shaped path preview indicator is straight schematic lines generated based on a shape of the work area, as shown in FIG.4. The movement path of the mobile robot generated based on the bow-shaped path preview indicator is a bow-shaped path, and the mobile robot moves according to the bow-shaped path, and completes an operation after moving over all bow-shaped paths.

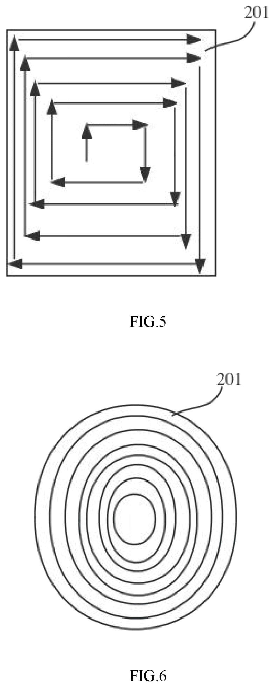

The loop-shaped path preview indicator is curved or loop-shaped schematic lines generated based on the shape of the work area, as shown in FIG.5. The movement path of the mobile robot generated based on the loop-shaped path preview indicator is a loop-shaped path. The mobile robot moves loop-by-loop according to the loop-shaped path, and completes the operation after moving over all path loops.

It should be understood that the loop-shaped path preview indicator is adaptively generated based on a shape of the map included in the work area. In response to the shape of the work area being an annular shape, a generated loop-shaped path preview indicator can be shown in FIG. 6.

For example, in a clockwise direction, the user continuously adjusts the trajectory adjustment indicator along the clockwise direction, to obtain a cumulative change value of angle information corresponding to adjusting the trajectory adjustment indicator in the clockwise direction by the user. In response to the cumulative change value being greater than or equal to 360 degrees, a style corresponding to the target path preview indicator is the loop-shaped path preview indicator.

In some embodiments, before the displaying the operation interface, the method further comprising: obtaining operation information, and determining a target operation mode corresponding to the work area indicator based on the operation information, the target operation mode comprising a single traversal mode and a repeated traversal mode, wherein the single traversal mode indicates obtaining a single target path preview indicator in the work area indicator, and the repeated traversal mode indicates obtaining a plurality of target path preview indicators in the work area indicator.

Exemplarily, before displaying the operation interface, operation information corresponding to the mobile robot is obtained, to determine a target operation mode performed by the mobile robot in map information corresponding to the work area indicator based on the operation information.

Exemplarily, the target operation mode comprising a single traversal mode and a repeated traversal mode. The single traversal mode indicates obtaining a single target path preview indicator in the work area indicator, so that the mobile robot completes a corresponding task based on the single target path preview indicator. The repeated traversal mode indicates obtaining a plurality of target path preview indicators in the work area indicator, so that the mobile robot executes a plurality of tasks based on the plurality of target path preview indicators, ensuring quality of work completed by the mobile robot in map information corresponding to the work area indicator. Preferably, the repeated traversal mode indicates obtaining two target path preview indicators in the work area indicator.

For example, the mobile robot is a lawn mowing robot. In response to the lawn mowing robot being in the single traversal mode, the lawn mowing robot only needs to perform a mowing task once according to one target path preview indicator. In response to the lawn mowing robot being in the repeated traversal mode, the lawn mowing robot needs to perform a plurality of mowing tasks according to a plurality of target path preview indicators. Each target path preview indicator completely covers an entire target work area, but the target path preview indicators correspond to different angles, and generated target paths are different. That is, the lawn mowing robot performs a plurality of complete mowing tasks at different angles in the target work area, avoiding missed mowing in the work area.

It should be understood that, at different travel angles, obstacle avoidance parameters for a same obstacle or restricted area may be different. The obstacle avoidance parameters may be a travel speed, a turning position, and etc. during obstacle avoidance, thus resulting in different generated movement paths. Different movement paths result in a higher operation coverage rate, reducing a ratio of missed mowing. Thus, when performing a corresponding task along movement paths generated at different angles in the repeated traversal mode, the mobile robot improves task quality, and better satisfies user requirements.

In some embodiments, in response to the target operation mode being the repeated traversal mode, the plurality of target path preview indicators intersect to form a rhombus pattern style or a rectangular pattern style.

Exemplarily, in response to the work area indicator comprising the plurality of target path preview indicators, the plurality of target path preview indicators intersect to form a rhombus pattern style or a rectangular pattern style. That is, the target path preview indicators have an intersection, rather than a parallel relationship. At the same time, before the target path preview indicators are generated, a corresponding plurality of initial path indicators also intersect to form a rhombus pattern style or a rectangular pattern style.

In some embodiments, different initial path preview indicators are provided with different indicator attributes, the indicator attributes comprising an indicator color, an indicator width, and a line style of an indicator.

Exemplarily, in response to the target operation mode being the repeated traversal mode, and the initial path preview indicator comprising at least a first path preview indicator and a second path preview indicator, or at least a third path preview indicator and a fourth path preview indicator, or at least a fifth path preview indicator and a sixth path preview indicator, the first path preview indicator and the second path preview indicator have different indicator attributes when displayed, the third path preview indicator and the fourth path preview indicator have different indicator attributes when displayed, and the fifth path preview indicator and the sixth path preview indicator have different indicator attributes when displayed.

For example, the first path preview indicator and the second path preview indicator are displayed as different colors for distinction. The third path preview indicator and the fourth path preview indicator are displayed as different line widths for distinction. The fifth path preview indicator and the sixth path preview indicator are displayed as different line styles for distinction.

Optionally, when distinguishing different path preview indicators, the indicator attributes comprising the indicator color, the indicator width, and the line style of the indicator can be randomly combined to achieve distinction, improving visibility.

In some embodiments, the initial path preview indicator comprising a first path preview indicator, the trajectory adjustment indicator comprising a first trajectory adjustment indicator, and the target operation mode is the repeated traversal mode; and the receiving trigger information generated in response to the preset trigger operation performed by the external object on the trajectory adjustment indicator,, the adjusting the initial path preview indicator based on the trigger information to obtain the target path preview indicator, and the displaying the target path preview indicator on the operation interface comprising: receiving first trigger information generated in response to a first preset trigger operation performed by the external object on the first trajectory adjustment indicator, and adjusting the first path preview indicator based on the first trigger information, to obtain a first target path preview indicator and display the first target path preview indicator; and determining a second target path preview indicator based on the first trigger information and a preset angle difference, and displaying the second target path preview indicator.

Exemplarily, the first path preview indicator and the first trajectory adjustment indicator corresponding to the first path preview indicator are displayed in the work area indicator of the operation interface. In response to the target operation mode being the repeated traversal mode, the external object drags or clicks the first trajectory adjustment indicator to change position information of the first trajectory adjustment indicator, to generate corresponding first trigger information, wherein the first preset trigger operation is at least one or more of dragging and clicking.

Exemplarily, first angle information corresponding to the first trajectory adjustment indicator is obtained based on the first trigger information, thereby adjusting the first path preview indicator based on the first angle information, to obtain the first target path preview indicator and display the first target path preview indicator. The turning the first path preview indicator based on the first trigger information may involve adjusting the first path preview indicator after a position of the first trajectory adjustment indicator is not moved, or controlling a corresponding first path preview indicator to change along with changing of the position of the first trajectory adjustment indicator, wherein a change type may be a linear change or an irregular change.

For example, the external object adjusts the position of the first trajectory adjustment indicator in a dragging manner. In response to the external object leaving the first trajectory adjustment indicator after the first trajectory adjustment indicator is dragged to a target position, the first path preview indicator is adjusted based on trigger information corresponding to the target position at this time, to obtain the first target path preview indicator and display the first target path preview indicator.

Exemplarily, in response to the target operation mode being the repeated traversal mode, and the first target path preview indicator being obtained based on the first trigger information, corresponding angle information is obtained based on the first trigger information. An adding or subtracting operation is performed on the angle information and the preset angle difference, to obtain target angle information corresponding to the second target path preview indicator, thereby obtaining the second target path preview indicator based on the target angle information and displaying the second target path preview indicator.

For example, in response to the angle information obtained based on the first trigger information being 30 degrees, and the preset angle difference being 50 degrees, target angle information corresponding to the second target path preview indicator is 30 degrees + 50 degrees = 80 degrees, or 30 degrees - 50 degrees = -20 degrees + 360 degrees = 340 degrees. Thus, corresponding second target path preview indicators can be obtained and displayed at target angle information of 80 degrees or 340 degrees.

In some embodiments, after the displaying the second target path preview indicator, the method further comprising: displaying a second trajectory adjustment indicator corresponding to the second target path preview indicator; receiving second trigger information generated in response to a second preset trigger operation performed by the external object on the second trajectory adjustment indicator, updating the second target path preview indicator based on the second trigger information to obtain an updated second target path preview indicator, and displaying the updated second target path preview indicator.

Exemplarily, when displaying the second target path preview indicator, the second trajectory adjustment indicator corresponding to the second target path preview indicator is displayed simultaneously, and the external object obtains the second trigger information by performing the second preset trigger operation on the second trajectory adjustment indicator, wherein the second preset trigger operation is one or more of dragging or clicking.

Exemplarily, second angle information corresponding to the second trajectory adjustment indicator is obtained based on the second trigger information, to adjust the second target path preview indicator based on the second angle information, to obtain the updated second target path preview indicator, and display the updated second target path preview indicator.

During obtaining the updated second target path preview indicator by adjusting the second target path preview indicator based on the angle change information, the second target path preview indicator may be adjusted when the position of the second trajectory adjustment indicator does not move, or a corresponding second path preview indicator may be controlled to change along with a change in the position of the second trajectory adjustment indicator, wherein a change type may be a linear change or an irregular change.

For example, the external object adjusts the position of the second trajectory adjustment indicator in a dragging manner. In response to the external object leaving the second trajectory adjustment indicator after the second trajectory adjustment indicator is dragged to a target position, the second target path preview indicator is adjusted based on trigger information corresponding to the target position at this time, thereby obtaining the updated second target path preview indicator and displaying the updated second target path preview indicator.

Exemplarily, during the process of adjusting the second target path preview indicator by the second trajectory adjustment indicator, the first target path preview indicator is not affected.

It should be understood that, in this embodiment, in the repeated traversal mode, the first target path preview indicator is determined first and displayed. On this basis, the second target path preview indicator is determined and displayed based on a preset angle difference, which can quickly obtain the second target path preview indicator, improving path planning efficiency. The user can further adjust and update the second target path preview indicator, which can improve flexibility, and further improve user experience.

In some embodiments, the preset angle difference is 90 degrees; or the preset angle difference is obtained based on an angle difference between the initial path preview indicators.

Exemplarily, the preset angle difference is 90 degrees, or the preset angle difference is obtained based on an angle difference between the first path preview indicator and the second path preview indicator determined from the initial path preview indicators in the repeated traversal mode. An angle difference among the plurality of initial path preview indicators is obtained based on historical records, for example, it is an angle difference among a plurality of target path preview indicators previously determined by the user in the repeated traversal mode, or for example, it is an angle difference among a plurality of target path preview indicators most frequently used by the user in the repeated traversal mode.

For example, in response to angle information corresponding to the first trigger information being 30 degrees, and the preset angle difference being 90 degrees, target angle information corresponding to the second target path preview indicator is 30 degrees + 90 degrees = 120 degrees, or 30 degrees - 90 degrees = - 60 degrees + 360 degrees = 300 degrees. Thus, corresponding second target path preview indicators can be obtained and displayed at target angle information of 120 degrees or 300 degrees. At this time, the first target path preview indicator and the second target path preview indicator are in a vertical state, forming a rectangular pattern style.

For example, in response to the angle information corresponding to the first trigger information being 30 degrees, and the preset angle difference based on an angle difference between the first path preview indicator and the second path preview indicator out of the initial path preview indicators being 40 degrees, target angle information corresponding to the second target path preview indicator is 30 degrees + 40 degrees = 70 degrees, or 30 degrees - 40 degrees = -10 degrees + 360 degrees = 350 degrees. Thus, corresponding second target path preview indicators can be obtained and displayed at target angle information of 70 degrees or 350 degrees. At this time, the first target path preview indicator and the second target path preview indicator are in an intersecting state, forming a rhombus pattern.

In some embodiments, the initial path preview indicator comprising at least a third path preview indicator and a fourth path preview indicator, the trajectory adjustment indicator comprising a third trajectory adjustment indicator, the third path preview indicator corresponds to the third trajectory adjustment indicator, and the target operation mode is the repeated traversal mode; and the receiving the trigger information generated in response to the preset trigger operation performed by the external object on the trajectory adjustment indicator, the adjusting the initial path preview indicator based on the trigger information to obtain the target path preview indicator, and the displaying the target path preview indicator on the operation interface comprising: receiving third trigger information generated in response to a third preset trigger operation performed by the external object on the third trajectory adjustment indicator, and adjusting the third path preview indicator based on the third trigger information to obtain a third target path preview indicator; adjusting the fourth path preview indicator to obtain a fourth target path preview indicator based on the third trigger information and a preset angle difference; and displaying the third target path preview indicator and the fourth target path preview indicator.

Exemplarily, the third path preview indicator and the fourth path preview indicator, as well as the third trajectory adjustment indicator corresponding to the third path preview indicator, are displayed in the work area indicator in the operation interface. The preset angle difference is obtained by subtracting angle information corresponding to the fourth path preview indicator from angle information corresponding to the third path preview indicator, wherein the third path preview indicator and the fourth path preview indicator can be stored and placed in a database after historical settings and obtained by reading from the database, or can be generated in a pre-configured manner.

For example, in response to the angle information corresponding to the third path preview indicator being 70 degrees, and the angle information corresponding to the fourth path preview indicator being 30 degrees, the preset angle difference is 40 degrees; and in response to the angle information corresponding to the third path preview indicator being 30 degrees, and the angle information corresponding to the fourth path preview indicator being 70 degrees, the preset angle difference is 30 degrees - 70 degrees = -40 degrees + 360 degrees = 320 degrees, that is, the preset angle difference is 320 degrees.

Exemplarily, the external object obtains the third trigger information by performing the third preset trigger operation on the third trajectory adjustment indicator, wherein the third preset trigger operation comprising one or more of dragging or clicking. Third angle information is obtained based on the third trigger information, to adjust the third path preview indicator based on the third angle information to obtain the third target path preview indicator, and at the same time, a target angle change corresponding to the fourth path preview indicator is determined based on the third angle information and the preset angle difference, to adjust the fourth path preview indicator based on the target angle change, to obtain the fourth target path preview indicator.

For example, the angle information corresponding to the third path preview indicator is 70 degrees, the angle information corresponding to the fourth path preview indicator is 30 degrees, and the preset angle difference is 40 degrees. In response to the angle change information being 60 degrees, that is, the third path preview indicator needs to be adjusted to 60 degrees at this time, the fourth path preview indicator should be correspondingly adjusted to 60 degrees - 40 degrees = 20 degrees.

Alternatively, in response to the third path preview indicator being increased or decreased by a 60-degree change to 130 degrees or 10 degrees based on the angle change information, the fourth path preview indicator is correspondingly changed to 90 degrees or (10 degrees - 40 degrees + 360 degrees) = 330 degrees.

Exemplarily, when the third path preview indicator and the fourth path preview indicator are adjusted simultaneously through the third trajectory adjustment indicator, an adjustment result can be displayed in real time, or when position information corresponding to the third trajectory adjustment indicator does not change, the third target path preview indicator and the fourth target path preview indicator obtained by adjusting the third path preview indicator and the fourth path preview indicator are displayed.

For example, the external object adjusts the third trajectory adjustment indicator in a dragging manner. In response to a triggering device such as an external object's finger or a capacitive pen leaving the third trajectory adjustment indicator, the third target path preview indicator and the fourth target path preview indicator are displayed.

Alternatively, in response to the external object adjusting the third trajectory adjustment indicator in a dragging manner, the third target path preview indicator and the fourth target path preview indicator are synchronously displayed through the dragging change.

It should be understood that, in this embodiment, in the repeated traversal mode, the third path preview indicator is determined first, then the fourth path preview indicator is determined based on the preset angle difference, and then the third path preview indicator and the fourth path preview indicator are displayed simultaneously. By adjusting the fourth path preview indicator while adjusting the third path preview indicator, path planning efficiency can be effectively improved. The user can further adjust and update the fourth path preview indicator, to improve flexibility, and further improve user experience.

In some embodiments, the method further comprising: displaying a fourth trajectory adjustment indicator corresponding to the fourth target path preview indicator; receiving fourth trigger information generated in response to a fourth preset trigger operation performed by the external object on the fourth trajectory adjustment indicator, adjusting the fourth target path preview indicator based on the fourth trigger information to obtain an updated fourth target path preview indicator, and displaying the third target path preview indicator and the updated fourth target path preview indicator.

Exemplarily, while the third trajectory adjustment indicator adjusts the third path preview indicator and the fourth path preview indicator, a fourth trajectory adjustment indicator corresponding to the fourth path preview indicator or the fourth target path preview indicator is also displayed.

The fourth trajectory adjustment indicator can be changed and adjusted based on the third trigger information and the preset angle difference, or can be synchronously adjusted based on a change of the fourth path preview indicator, so that the fourth trajectory adjustment indicator and the fourth path preview indicator or the fourth target path preview indicator keep a consistent changed state.

Exemplarily, after obtaining the third target path preview indicator and the fourth target path preview indicator by adjusting the third path preview indicator and the fourth path preview indicator through the third trajectory adjustment indicator, the external object obtains the fourth trigger information by executing the fourth preset trigger operation through the fourth trajectory adjustment indicator, wherein the fourth preset trigger operation comprising one or more of dragging or clicking.

Exemplarily, corresponding fourth angle information is obtained based on the fourth trigger information, to update the fourth target path preview indicator based on the fourth angle information, and display the updated fourth target path preview indicator. During this process, the fourth trajectory adjustment indicator is only aimed at the fourth target path preview indicator, and is not aimed at the third path preview indicator or the third target path preview indicator.

In addition, after settings of the third target path preview indicator and the fourth target path preview indicator are completed, a final angle difference between them is stored to form a historical record, which is further used for generating an initial path preview indicator.

For example, in response to an angle difference corresponding to generating the third target path preview indicator and the fourth target path preview indicator in the work area indicator being 60 degrees at a time point a, when path planning needs to be performed in the work area indicator again at a time point b, the angle difference of 60 degrees corresponding to the time point a can be used at this time, to generate corresponding initial path preview indicators.

In some embodiments, the preset angle difference is 90 degrees; or the preset angle difference is obtained based on the angle difference between the initial path preview indicators.

Exemplarily, the preset angle difference is 90 degrees, or the preset angle difference is obtained based on an angle difference between the third path preview indicator and the fourth path preview indicator out of the initial path preview indicators in the repeated traversal mode. An angle difference among the plurality of initial path preview indicators is obtained based on historical records, for example, it is an angle difference among a plurality of target path preview indicators previously determined by the user in the repeated traversal mode, or for example, it is an angle difference among a plurality of target path preview indicators most frequently used by the user in the repeated traversal mode.

For example, in response to the preset angle difference between the third path preview indicator and the fourth path preview indicator being 90 degrees, the third path preview indicator and the fourth path preview indicator cross each other consistently to form a rectangular pattern.

Alternatively, in response to a pattern formed by crossing an angle difference between the third path preview indicator and the fourth path preview indicator being a rhombus pattern, the formed rhombus pattern remains unchanged when the third path preview indicator and the fourth path preview indicator are adjusted by the third trajectory indicator, only its position being moved.

In some embodiments, the initial path preview indicator comprising at least a fifth path preview indicator and a sixth path preview indicator, the trajectory adjustment indicator comprising a fifth trajectory adjustment indicator and a sixth trajectory adjustment indicator, the fifth path preview indicator corresponds to the fifth trajectory adjustment indicator, the sixth path preview indicator corresponds to the sixth trajectory adjustment indicator, and the target operation mode is the repeated traversal mode; and the receiving the trigger information generated in response to the preset trigger operation performed by the external object on the trajectory adjustment indicator, the adjusting the initial path preview indicator based on the trigger information to obtain the target path preview indicator, and the displaying the target path preview indicator on the operation interface comprising: receiving fifth trigger information generated in response to a fifth preset trigger operation performed by the external object on the fifth trajectory adjustment indicator, and at the same time receiving sixth trigger information generated based on the external object performing a sixth preset trigger operation on the sixth trajectory adjustment indicator; adjusting the fifth path preview indicator based on the fifth trigger information to obtain a fifth target path preview indicator and display the fifth target path preview indicator, and adjusting the sixth path preview indicator based on the sixth trigger information to obtain a sixth target path preview indicator and display the sixth target path preview indicator.

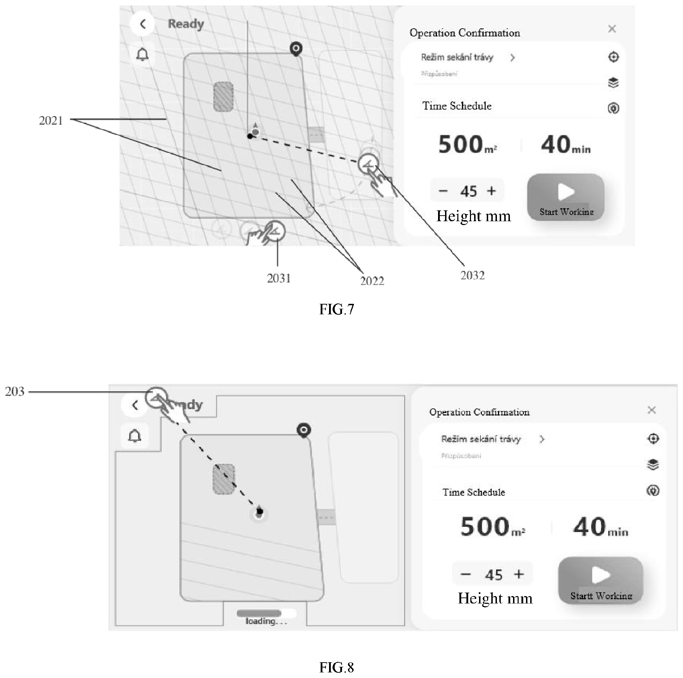

Exemplarily, as shown in FIG.7, in response to the target operation mode being the repeated traversal mode, a fifth path preview indicator 2021 and a sixth path preview indicator 2022 are displayed in the work area indicator of the operation interface, and a fifth trajectory adjustment indicator 2031 corresponding to the fifth path preview indicator and a sixth trajectory adjustment indicator 2032 corresponding to the sixth path preview indicator are displayed.

Exemplarily, the external object may perform a fifth preset operation through the fifth trajectory adjustment indicator, and perform a sixth preset operation through the sixth trajectory adjustment indicator. Therefore, corresponding fifth trigger information is obtained through the fifth preset operation, and corresponding sixth trigger information is obtained through the sixth preset operation. The fifth preset operation is one or more of dragging or clicking, and the sixth preset operation is one or more of dragging or clicking.

Exemplarily, fifth angle information corresponding to the fifth trajectory adjustment indicator is obtained based on the fifth trigger information, and sixth angle information corresponding to the sixth trajectory adjustment indicator is obtained based on the sixth trigger information, to adjust the fifth path preview indicator based on the fifth angle information and adjust the sixth path preview indicator based on the sixth angle information.

For example, current angle information of the fifth path preview indicator is 30 degrees, current angle information of the sixth path preview indicator is 120 degrees, and the fifth path preview indicator and the sixth path preview indicator are in a vertical state to form a rectangular pattern. The fifth angle information obtained from the fifth trigger information is 40 degrees, and the sixth angle information obtained from the sixth trigger information is 50 degrees. Therefore, obtained angle information corresponding to an adjusted fifth path preview indicator is 30 degrees + 40 degrees = 70 degrees, and obtained angle information corresponding to an adjusted sixth path preview indicator is 120 degrees + 50 degrees = 170 degrees, and a pattern formed by intersecting the adjusted fifth path preview indicator and the adjusted sixth path preview indicator is a rhombus pattern.

Exemplarily, corresponding fifth target path preview indicator and sixth target path preview indicator are respectfully obtained during the process of adjusting the fifth path preview indicator based on the fifth trajectory adjustment indicator and adjusting the sixth path preview indicator based on the sixth trajectory adjustment indicator. During this process, the fifth target path preview indicator and the sixth target path preview indicator can be displayed in real time, or the fifth target path preview indicator and the sixth target path preview indicator can be displayed after execution of the preset trigger operation is completed.

For example, in response to the fifth trajectory adjustment indicator executing the preset trigger operation in a dragging manner, the fifth target path preview indicator is displayed after execution of the dragging operation is completed. In response to the sixth trajectory adjustment indicator executing the preset trigger operation in a dragging manner, the sixth target path preview indicator is displayed after execution of the dragging operation is completed.

It should be understood that, in this embodiment, in the repeated traversal mode, the user can simultaneously control two trajectory adjustment indicators, to simultaneously determine the fifth target path preview indicator and the sixth target path preview indicator, and simultaneously display the fifth target path preview indicator and the sixth target path preview indicator. By simultaneously controlling the fifth trajectory adjustment indicator and the sixth trajectory adjustment indicator, path planning efficiency can be effectively improved, flexibility can be improved, and user experience can be further improved.

It should be noted that, in embodiments of this disclosure, the plurality of initial path preview indicators and the plurality of target path preview indicators can not only form rectangular or diamond pattern styles. In response to having three or more initial path preview indicators or target path preview indicators, various irregular patterns will be formed, which is not limited herein.

In some embodiments, the initial path preview indicator is displayed in the work area indicator.

Exemplarily, as shown in FIG. 3, the initial path preview indicator 202 is only displayed in the work area indicator. That is, the initial path preview indicator is displayed only inside a map frame, and is not displayed outside the map frame and in unselected map areas.

In some embodiments, the method further comprising: controlling the initial path preview indicator to perform a preset adjustment operation based on a moving trajectory of the trajectory adjustment indicator on the operation interface, and displaying an execution result of the initial path preview indicator performing the preset adjustment operation in real time.

Exemplarily, the trajectory adjustment indicator moves on the operation interface, thereby controlling the initial path preview indicator to perform the preset adjustment operation, the preset adjustment operation is angle transformation, and the execution result of the initial path preview indicator performing the preset adjustment operation is displayed in real time.

For example, in response to the trajectory adjustment indicator being changed, the initial path preview indicator is synchronously changed, and a change result is displayed in real time.

Step S103, generating a movement path of a mobile robot corresponding to the target path preview indicator.

Exemplarily, position information is determined based on trigger information corresponding to the target path preview indicator, and the movement path of the mobile robot in map information corresponding to the work area indicator is matched.

Specifically, the position information may be relative position information, angle information, and etc. described in the foregoing embodiments, which are not repeated herein.

After obtaining the target path preview indicator, corresponding angle information is determined based on the target path preview indicator, thereby obtaining the movement path of the mobile robot in the map information corresponding to the work area indicator based on the angle information.

For example, the corresponding angle information obtained based on the target path preview indicator is 30 degrees, and a corresponding bow-shaped path is generated based on the angle information.

Alternatively, after obtaining the angle information corresponding to the target path preview indicator, a query is performed in a database based on the angle information, to obtain path information corresponding to a minimum difference from the angle information as the movement path of the mobile robot.

For example, the angle information corresponding to the target path preview indicator is 30 degrees, and the path information already stored in the database comprising path information A at an angle information of 32 degrees, path information B at an angle information of 35 degrees, and path information C at an angle information of 45 degrees, and etc. In this case, a query can be performed in the database based on the angle information of 30 degrees, so as to obtain the path information A corresponding to the angle information of 32 degrees with the minimum difference as the movement path of the mobile robot.

Furthermore, during obtaining the target path preview indicator, in response to a cumulative change value of the angle information in a same direction being greater than or equal to 360 degrees, a path generation mode is determined to be a loop shape based on the angle information, and corresponding loop-shaped paths are generated in a target work area.

In addition, an inclination angle of the movement path is identical to an inclination angle of the target path preview indicator. However, during obtaining the movement path, planning needs to be performed with reference to actual scenarios such as obstacles, restricted areas, slopes, and a shape of the work area included in the map information corresponding to the target work area. Therefore, a finally generated movement path may be somewhat different from the target path preview indicator.

For example, taking the bow-shaped path as an example, the movement path comprising a plurality of sub-paths, wherein a path inclination angle of a sub-path comprising an obstacle avoidance path may be different from a target path indicator. Moreover, an interval between sub-paths may be different from an interval between the line patterns in the target path preview indicator. Thus, although the movement path and the target path preview indicator have a same inclination angle, the sub-paths and the line patterns may or may not coincide.

Exemplarily, during determining the target work area of the mobile robot based on tasks to be completed by the mobile robot, in response to a plurality of target work areas, generating movement paths of the mobile robot corresponding to the plurality of target work areas based on the target path preview indicator requires generating connecting paths among the plurality of target work areas, so that the mobile robot completes a task corresponding to a target work area, and can further arrive at another target work area to perform a corresponding task according to a connecting path.

In some embodiments, the generating the movement path of the mobile robot corresponding to the target path preview indicator comprising: displaying a path confirmation interface, wherein the path confirmation interface is configured to receive a confirmation operation of the external object; and generating the movement path of the mobile robot corresponding to the target path preview indicator in response to the confirmation operation.

Exemplarily, after the target path preview indicator is obtained, the path confirmation interface is displayed. The path confirmation interface is configured to ask whether the external object agrees to generate the movement path of the mobile robot corresponding to the target path preview indicator based on a current target path preview indicator.

Exemplarily, the confirmation operation of the external object on the path confirmation interface is received, to generate the movement path of the mobile robot based on the target path preview indicator.

For example, the path confirmation interface is in a form of a pop-up window configured to ask whether the user agrees to generate the movement path of the mobile robot based on the target path preview indicator. In response to receiving a user agreement instruction, the movement path of the mobile robot corresponding to the target path preview indicator is generated. In response to not receiving a user agreement instruction or receiving a user rejection instruction, the movement path of the mobile robot corresponding to the target path preview indicator is not generated.

Further, after receiving the user rejection instruction, the user can adjust the current target path preview indicator again based on the trajectory adjustment indicator to update the target path preview indicator, and the path confirmation interface is displayed again after the update is completed.

In some embodiments, the method further comprising: displaying an operation information interface, wherein the operation information interface comprising operation information of the mobile robot performing an operation in a target work area; updating the operation information in response to an operation of the external object on the operation information interface or the operation interface; and updating the operation information interface based on the operation information.

Exemplarily, the operation interface comprising the operation information interface. As shown in FIG. 3, the operation interface displays an operation information interface 204, the operation information interface is configured to display operation information required when the mobile robot operates in the target work area, an adjustment operation performed by the external object on the operation information interface or the operation interface is received and responded to, to obtain updated operation information, and to update the operation information interface using the updated operation information.

For example, the operation information interface comprising adjustment and display buttons for an operation mode, to receive adjustments to the operation mode by the external object, thereby updating the operation information and the operation information interface.

In some embodiments, the operation information comprising at least one of: real area information corresponding to the work area indicator, time-consuming information corresponding to the mobile robot operating in the work area indicator, operation mode information, preset angle difference between the initial path preview indicators.

Exemplarily, the real area information is a real area corresponding to real map information corresponding to the work area indicator. Optionally, in response to a plurality of target work areas, real area information corresponding to the plurality of target work areas can be displayed separately, or a total area among the real areas corresponding to the plurality of target work areas can also be displayed.

The time-consuming information is time information required to complete a current task after an operation mode and a working path of the mobile robot are determined in the real map information. In response to a plurality of target work areas, a plurality of pieces of time information may be displayed separately, or total time information consumed to completely finish all the target work areas may be displayed.

The operation mode information is operation manner information when the mobile robot operates in the real map information. For example, in response to the mobile robot being a lawn mower, the operation mode information may be a simplex mowing mode, a duplex mowing mode, a bow-shaped mowing mode, a loop-shaped mowing mode, and the like.

The preset angle difference is an angle difference between the initial path preview indicators when the operation mode of the mobile robot in the real map information is the repeated traversal mode.

Optionally, the operation information may further include other information, such as speed information when the mobile robot operates in the real map information, cutting deck height information when the mobile robot is a lawn mower, and etc. In this disclosure, specific limitations are not made, and selections may be made based on requirements.

Further, updating the operation information in response to the adjustment operation of the external object on the operation information interface, and updating the operation information interface based on the operation information further include: adjusting a preset angle difference.

Further, updating the operation information in response to the adjustment operation of the external object on the operation interface, and updating the operation information interface based on the operation information further comprising: updating the time-consuming information, the speed information, etc., based on the movement path of the mobile robot. It should be understood that, operation information corresponding to different movement paths in a same work area may be different. For example, time-consuming information corresponding to different movement paths may have deviations. The movement path is generated based on the target path preview indicator selected by the user, and then the operation information interface is updated based on the operation information corresponding to the movement path. Therefore, the user can obtain updated operation information in a timely manner, confirm whether to adopt this movement path, and determine whether the movement path needs to be adjusted again.

For example, after a movement path is generated, if according to relevant information such as performance information of the mobile robot and actual environment information of the work area, time-consuming information corresponding to the movement path is predicted to be 30 minutes, the time-consuming information of 30 minutes is updated to the operation information interface. If the user confirms that the time-consuming information is excessive, the trajectory adjustment indicator can be used again to adjust a path preview indicator to generate a new movement path.

In some embodiments, after the generating the movement path of the mobile robot corresponding to the target path preview indicator, the method further comprising: obtaining at least two target path preview indicators in response to determining the target operation mode being the repeated traversal mode, and in response to determining that an angle difference between the at least two target path preview indicators is 180 degrees, determining that directions of pieces of path information corresponding to the at least two target path preview indicators are the same as each other or opposite to each other.

The path information may be a travel direction, an obstacle bypass direction, and etc.

Exemplarily, in response to the target operation mode being the repeated traversal mode, at least two target path preview indicators are obtained in the work area indicator. In response to an angle difference between the two target path preview indicators being 180 degrees, it indicates that path travel directions corresponding to the two target path preview indicators are same or opposite.

For example, the target path preview indicators are respectively a first target path preview indicator and a second target path preview indicator. In response to an angle value corresponding to the first target path preview indicator being 30 degrees, and an angle value corresponding to the second target path preview indicator being 210 degrees, an angle difference between the first target path preview indicator and the second target path preview indicator is 180 degrees. That is, the first target path preview indicator and the second target path preview indicator are in a parallel state, then when obtaining a corresponding path travel direction, it may be a same direction or an opposite direction.

In some embodiments, the operation interface is further provided with a function indicator, and the method further comprising: after the preset trigger operation is completed, in response to an overlapping area existing between the trajectory adjustment indicator and the function indicator, adjusting a display position of the trajectory adjustment indicator on the operation interface, wherein the display position is on a connection line between a target position corresponding to the trigger information and a preset reference position, and no overlapping area exists between the display position and the function indicator.

Exemplarily, the operation interface is further provided with a function indicator. After the preset trigger operation is completed, in response to an overlapping area existing between position information where the trajectory adjustment indicator is located and position information where the function indicator is located, normal uses of the trajectory adjustment indicator and the function indicator may be affected at this time. Therefore, the display position of the trajectory adjustment indicator in the operation interface needs to be adjusted, so that the trajectory adjustment indicator is normally displayed without affecting an adjustment effect of the trajectory adjustment indicator on the initial path preview indicator and a normal use of the function indicator, thereby avoiding a mis-touch by a user between the trajectory adjustment indicator and the function indicator, and improving user experience degree and adjustment efficiency.

Exemplarily, when adjusting the display position of the trajectory adjustment indicator in the operation interface, the normal use of the function indicator cannot be affected, so it only needs to be that the trajectory adjustment indicator and the function indicator do not have an overlapping area. However, if the adjustment effect of the trajectory adjustment indicator on the initial path preview indicator is not to be affected, an angle change corresponding to the trajectory adjustment indicator needs to be unchanged. Therefore, the trajectory adjustment indicator is adjusted to the connection line between the target position corresponding to the trigger information and the preset reference position, and there is no overlapping area between the display position and the function indicator.

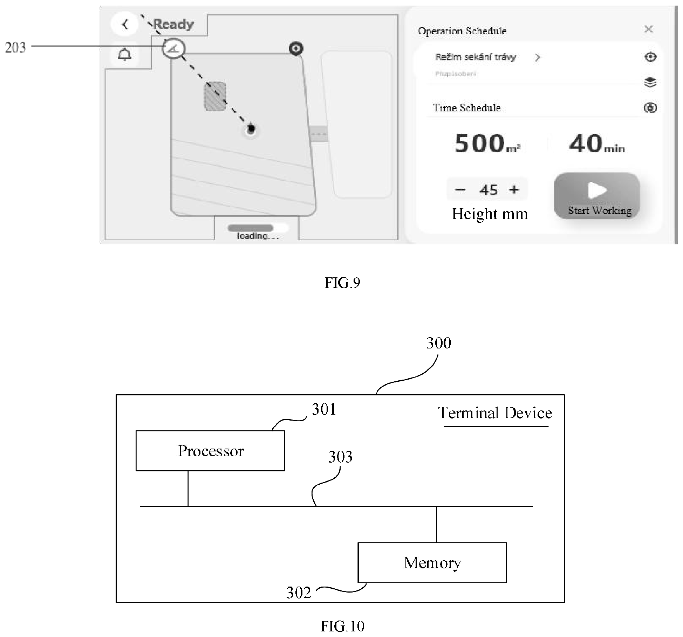

For example, as shown in FIG. 8 and FIG. 9, the function indicator comprising a Ready button and a notification button. When the Ready button overlaps with the trajectory adjustment indicator, if the trajectory adjustment indicator is placed at this position at this time to end an adjustment, then in order to not affect normal uses of the Ready button and the trajectory adjustment indicator, the trajectory adjustment indicator can be adjusted to the connection line between the target position corresponding to the trigger information and the preset reference position, and there is no overlapping area between the display position of the trajectory adjustment indicator and the function indicator.

Referring to FIG.10, FIG.10 is a schematic structural block diagram of a terminal device according to an embodiment.

As shown in FIG.10, a terminal device 300 comprising a processor 301 and a memory 302. The processor 301 and the memory 302 are connected through a bus 303. The bus is, for example, an Inter-integrated Circuit (I2C) bus.

Specifically, the processor 301 is configured to provide calculating and controlling capabilities to support operations of the entire terminal device. The processor 301 may be a Central Processing Unit (CPU). The processor 301 may also be other general-purpose processors, a Digital Signal Processor (DSP), an Application Specific Integrated Circuit (ASIC), a Field-Programmable Gate Array (FPGA) or other programmable logic devices, discrete gate or transistor logic devices, discrete hardware components, and etc. The general-purpose processor may be a microprocessor, or the processor may be any conventional processor, and etc.

Specifically, the memory 302 may be a Flash chip, a Read-Only Memory (ROM), a magnetic disk, an optical disc, a USB flash drive, or a mobile hard disk drive, and etc.

A person skilled in the art can understand that the structure shown in FIG. 10 is merely a block diagram of a part of the structure related to the solution of the embodiments of this disclosure, and does not constitute a limitation to the terminal device to which the solution of the embodiments of this disclosure is applied. A specific terminal device may include more or fewer components than those shown in the figure, or combine some components, or have different component arrangements.

The processor is configured to run a computer program stored in the memory, and when executing the computer program, implement any method for adjusting movement path provided in the embodiments of this disclosure.

In an embodiment, the processor is configured to run a computer program stored in the memory, and when executing the computer program, implement the following steps:
displaying an operation interface, wherein the operation interface is provided with a work area indicator, an initial path preview indicator, and a trajectory adjustment indicator;
receiving trigger information generated based on an external object performing a preset trigger operation on the trajectory adjustment indicator, adjusting the initial path preview indicator based on the trigger information to obtain a target path preview indicator, and displaying the target path preview indicator on the operation interface; and
generating a movement path of a mobile robot corresponding to the target path preview indicator.

In some embodiments, in a process before displaying the operation interface, the processor 301 further executes:
determining a target work area of the mobile robot, and generating the operation interface corresponding to the target work area, wherein the work area indicator is generated based on the target work area.

In some embodiments, in a process of adjusting the initial path preview indicator based on the trigger information to obtain the target path preview indicator, the processor 301 executes:
determining relative position information between the trajectory adjustment indicator and a preset reference position based on the trigger information;
adjusting the initial path preview indicator based on the relative position information, to obtain the target path preview indicator.

In some embodiments, the relative position information comprising angle information, and during a process of determining the relative position information between the trajectory adjustment indicator and the preset reference position based on the trigger information, the processor 301 executes:
determining a target position corresponding to the trigger information, and determining a connection line based on the target position and the preset reference position;
calculating an included angle between the connection line and a target reference line, and determining the angle information between the trajectory adjustment indicator and the preset reference position based on the included angle.

In some embodiments, during a process of adjusting the initial path preview indicator based on the relative position information to obtain the target path preview indicator, the processor 301 executes:
configuring the target path preview indicator to be a loop-shaped path preview indicator in response to a cumulative change value of the angle information in a same direction being greater than or equal to 360 degrees.

In some embodiments, in a process before displaying the operation interface, the processor 301 further executes:
obtaining operation information, and determining a target operation mode corresponding to the work area indicator based on the operation information, the target operation mode comprising a single traversal mode and a repeated traversal mode, wherein the single traversal mode indicates obtaining a single target path preview indicator in the work area indicator, and the repeated traversal mode indicates obtaining a plurality of target path preview indicators in the work area indicator.

In some embodiments, the processor 301 executes that in response to the target operation mode being the repeated traversal mode, the plurality of target path preview indicators intersect to form a rhombus pattern style or a rectangular pattern style.

In some embodiments, the processor 301 executes that different initial path preview indicators are provided with different indicator attributes, the indicator attributes comprising an indicator color, an indicator width, and a line style of an indicator.

In some embodiments, the initial path preview indicator comprising a first path preview indicator, the trajectory adjustment indicator comprising a first trajectory adjustment indicator, and the target operation mode is the repeated traversal mode; and
during a process of receiving the trigger information generated based on the external object performing the preset trigger operation on the trajectory adjustment indicator, adjusting the initial path preview indicator based on the trigger information to obtain the target path preview indicator, and displaying the target path preview indicator on the operation interface, the processor 301 executes:
receiving first trigger information generated based on the external object performing a first preset trigger operation on the first trajectory adjustment indicator, adjusting the first path preview indicator based on the first trigger information to obtain a first target path preview indicator, and displaying the first target path preview indicator;
determining a second target path preview indicator based on the first trigger information and a preset angle difference, and displaying the second target path preview indicator.

In some embodiments, in a process after displaying the second target path preview indicator, the processor 301 further executes:
displaying a second trajectory adjustment indicator corresponding to the second target path preview indicator;
receiving second trigger information generated based on the external object performing a second preset trigger operation on the second trajectory adjustment indicator, updating the second target path preview indicator based on the second trigger information to obtain an updated second target path preview indicator, and displaying the updated second target path preview indicator.

In some embodiments, the initial path preview indicator comprising at least a third path preview indicator and a fourth path preview indicator, the trajectory adjustment indicator comprising a third trajectory adjustment indicator, the third path preview indicator corresponds to the third trajectory adjustment indicator, and the target operation mode is the repeated traversal mode; and
during a process of receiving the trigger information generated based on the external object performing the preset trigger operation on the trajectory adjustment indicator, adjusting the initial path preview indicator based on the trigger information to obtain the target path preview indicator, and displaying the target path preview indicator on the operation interface, the processor 301 executes:
receiving third trigger information generated based on the external object performing a third preset trigger operation on the third trajectory adjustment indicator, and adjusting the third path preview indicator based on the third trigger information to obtain a third target path preview indicator;
adjusting the fourth path preview indicator to obtain a fourth target path preview indicator based on the third trigger information and a preset angle difference;
displaying the third target path preview indicator and the fourth target path preview indicator.

In some embodiments, the processor 301 further executes:
displaying a fourth trajectory adjustment indicator corresponding to the fourth target path preview indicator;
receiving fourth trigger information generated based on the external object performing a fourth preset trigger operation on the fourth trajectory adjustment indicator, adjusting the fourth target path preview indicator based on the fourth trigger information to obtain an updated fourth target path preview indicator, and displaying the third target path preview indicator and the updated fourth target path preview indicator.

In some embodiments, the initial path preview indicator comprising at least a fifth path preview indicator and a sixth path preview indicator, the trajectory adjustment indicator comprising a fifth trajectory adjustment indicator and a sixth trajectory adjustment indicator, the fifth path preview indicator corresponds to the fifth trajectory adjustment indicator, the sixth path preview indicator corresponds to the sixth trajectory adjustment indicator, and the target operation mode is the repeated traversal mode; and
during a process of receiving the trigger information generated based on the external object performing the preset trigger operation on the trajectory adjustment indicator, adjusting the initial path preview indicator based on the trigger information to obtain the target path preview indicator, and displaying the target path preview indicator on the operation interface, the processor 301 executes:
receiving fifth trigger information generated based on the external object performing a fifth preset trigger operation on the fifth trajectory adjustment indicator, and at the same time receiving sixth trigger information generated based on the external object performing a sixth preset trigger operation on the sixth trajectory adjustment indicator;
adjusting the fifth path preview indicator based on the fifth trigger information to obtain a fifth target path preview indicator and displaying the fifth target path preview indicator, and adjusting the sixth path preview indicator based on the sixth trigger information to obtain a sixth target path preview indicator and displaying the sixth target path preview indicator.

In some embodiments, the processor 301 executes that the preset angle difference is 90 degrees; or the preset angle difference is obtained based on an angle difference between the initial path preview indicators.

In some embodiments, the processor 301 executes that the initial path preview indicator is displayed in the work area indicator.

In some embodiments, the processor 301 further executes:
controlling the initial path preview indicator to perform a preset adjustment operation based on a moving trajectory of the trajectory adjustment indicator on the operation interface, and displaying an execution result of the initial path preview indicator performing the preset adjustment operation in real time.

In some embodiments, during a process of generating the movement path of the mobile robot corresponding to the target path preview indicator, the processor 301 executes:
displaying a path confirmation interface, wherein the path confirmation interface is configured to receive a confirmation operation of the external object;
generating the movement path of the mobile robot corresponding to the target path preview indicator in response to the confirmation operation.

In some embodiments, the processor 301 further executes:
displaying an operation information interface, wherein the operation information interface comprising operation information of the mobile robot performing an operation in a target work area;
updating the operation information in response to an operation of the external object on the operation information interface or the operation interface;
updating the operation information interface based on the operation information.

In some embodiments, the operation information comprising one or more of real area information corresponding to the work area indicator, time-consuming information corresponding to the mobile robot operating in the work area indicator, operation mode information, or the preset angle difference between the initial path preview indicators.

In some embodiments, a preset reference position is a center position of the work area indicator, or the preset reference position is a center position of the operation interface.

In some embodiments, in a process after generating the movement path of the mobile robot corresponding to the target path preview indicator, the processor 301 further executes:
obtaining at least two target path preview indicators in response to determining the target operation mode being the repeated traversal mode, and in response to an angle difference between the target path preview indicators being 180 degrees, directions between pieces of path information corresponding to the target path preview indicators being same or opposite.

In some embodiments, the operation interface is further provided with a function indicator, and the processor 301 further executes:
after the preset trigger operation is completed, in response to an overlapping area existing between the trajectory adjustment indicator and the function indicator, adjusting a display position of the trajectory adjustment indicator on the operation interface, wherein the display position is on a connection line between a target position corresponding to the trigger information and a preset reference position, and an overlapping area does not exist between the display position and the function indicator.

It should be noted that, a person skilled in the art can clearly understand that for convenience and conciseness of description, for specific operating processes of the terminal device described above, corresponding processes in the foregoing method embodiments for adjusting movement path can be referred to, which will not be repeated herein.

Embodiments of this disclosure further provide a non-transitory computer readable storage medium storing one or more programs. The one or more programs are executable by one or more processors to implement steps of any method for adjusting movement path provided in the description of embodiments of this disclosure.

The storage medium may be an internal storage unit of the terminal device described in the foregoing embodiments, for example, a hard disk or a memory of the terminal device. The storage medium may also be an external storage device of the terminal device, for example, a pluggable hard disk, a Smart Media Card (SMC), a Secure Digital (SD) card, a Flash Card, and etc., equipped on the terminal device.

A person of ordinary skill in the art can understand that all or some steps, systems, and functional modules/units in the devices in the methods disclosed above may be implemented as software, firmware, hardware, and their appropriate combinations. In hardware embodiments, division between the functional modules/units mentioned in the above descriptions does not necessarily correspond to division of physical components. For example, one physical component may have a plurality of functions, or one function or step may be cooperatively executed by several physical components. Some physical components or all physical components may be implemented as software executed by a processor, such as a central processing unit, a digital signal processor or a microprocessor, or implemented as hardware, or implemented as an integrated circuit, such as an application specific integrated circuit. Such software may be distributed on computer readable media, which may include computer storage media (or non-transitory media) and communication media (or transitory media). As is known to a person of ordinary skill in the art, the term computer storage media include volatile and non-volatile, removable and non-removable media implemented in any method or technology for storing information (such as computer readable instructions, data structures, program modules, or other data). The computer storage media include, but are not limited to, RAM, ROM, EEPROM, flash memory or other memory technologies, CD-ROM, Digital Versatile Disc (DVD) or other optical disc storage, magnetic cassette, magnetic tape, magnetic disk storage or other magnetic storage devices, or any other media which could be used to store desired information and can be accessed by a computer. In addition, as is known to a person of ordinary skill in the art, the communication media typically include computer readable instructions, data structures, program modules, or other data in a modulated data signal such as a carrier wave or other transport mechanism, and may include any information delivery media.

It should be understood that the term "and/or" used in the description and appended claims of this disclosure refers to and comprising any combination and all possible combinations of one or more associated listed items. It should be noted that, in this specification, the terms "include", "comprising", or any of their variants are intended to cover a non-exclusive inclusion, such that a process, method, article, or system comprising a series of elements not only comprising those elements, but also comprising other elements not explicitly listed, or also comprising elements inherent to such process, method, article, or system. In absence of more restrictions, an element defined by a language "comprising a ..." does not exclude presence of another same element in the process, method, article, or system comprising the element.
The foregoing serial numbers of the embodiments of this disclosure are merely for description, and do not represent relative merits of the embodiments. The foregoing embodiments are merely specific embodiments of this disclosure, but the protection scope of this disclosure is not limited thereto. Any person familiar with this technical field can easily think of various equivalent modifications or replacements within the technical scope disclosed in this disclosure, and these modifications or replacements shall all fall within the protection scope of this disclosure. Therefore, the protection scope of this disclosure shall be subject to the protection scope of the claims.

## Claims

1. A method for adjusting a movement path, comprising:
displaying an operation interface, wherein the operation interface is provided with a work area indicator, an initial path preview indicator, and a trajectory adjustment indicator;
receiving trigger information generated in response to a preset trigger operation performed by an external object on the trajectory adjustment indicator, adjusting the initial path preview indicator based on the trigger information to obtain a target path preview indicator, and displaying the target path preview indicator on the operation interface; and
generating a movement path of a mobile robot corresponding to the target path preview indicator.

2. The method according to claim 1, wherein before the displaying the operation interface, the method further comprising:
determining a target work area of the mobile robot, and generating the operation interface corresponding to the target work area, wherein the work area indicator is generated based on the target work area.

3. The method according to claim 1, wherein the adjusting the initial path preview indicator based on the trigger information to obtain the target path preview indicator comprising:
determining relative position information between the trajectory adjustment indicator and a preset reference position based on the trigger information;
adjusting the initial path preview indicator based on the relative position information, to obtain the target path preview indicator.

4. The method according to claim 3, wherein the relative position information comprising angle information, and determining the relative position information between the trajectory adjustment indicator and the preset reference position based on the trigger information comprising:
determining a target position corresponding to the trigger information, and determining a connection line based on the target position and the preset reference position;
calculating an included angle between the connection line and a target reference line, and determining the angle information between the trajectory adjustment indicator and the preset reference position based on the included angle.

5. The method according to claim 4, wherein the adjusting the initial path preview indicator based on the relative position information to obtain the target path preview indicator comprising:
in response to a cumulative change of the angle information in the same direction being greater than or equal to 360 degrees, determining that the target path preview indicator is a loop-shaped path preview indicator.

6. The method according to claim 1, wherein before displaying the operation interface, the method further comprising:
obtaining operation information, and
determining a target operation mode corresponding to the work area indicator based on the operation information, the target operation mode being a single traversal mode or a repeated traversal mode, wherein the single traversal mode indicates obtaining a single target path preview indicator in the work area indicator, and the repeated traversal mode indicates obtaining a plurality of target paths preview indicators in the work area indicator.

7. The method according to claim 6, wherein in response to the target operation mode being the repeated traversal mode, the plurality of target path preview indicators intersect to form a rhombus pattern style or a rectangular pattern style.

8. The method according to claim 6, wherein different initial path preview indicators are provided with different indicator attributes, the indicator attributes comprising an indicator color, an indicator width, and a line style of an indicator.

9. The method according to claim 6, wherein the initial path preview indicator comprising a first path preview indicator, the trajectory adjustment indicator comprising a first trajectory adjustment indicator, and the target operation mode is the repeated traversal mode; and
the receiving trigger information generated in response to the preset trigger operation performed by the external object on the trajectory adjustment indicator, the adjusting the initial path preview indicator based on the trigger information to obtain the target path preview indicator, and the displaying the target path preview indicator on the operation interface comprising:
receiving first trigger information generated in response to a first preset trigger operation performed by the external object on the first trajectory adjustment indicator, adjusting the first path preview indicator based on the first trigger information to obtain a first target path preview indicator, and displaying the first target path preview indicator;
determining a second target path preview indicator based on the first trigger information and a preset angle difference, and displaying the second target path preview indicator.

10. The method according to claim 9, wherein after displaying the second target path preview indicator, the method further comprising:
displaying a second trajectory adjustment indicator corresponding to the second target path preview indicator; receiving second trigger information generated in response to a second preset trigger operation performed by the external object on the second trajectory adjustment indicator; updating the second target path preview indicator based on the second trigger information to obtain an updated second target path preview indicator, and displaying the updated second target path preview indicator.

11. The method according to claim 6, wherein the initial path preview indicator comprising at least a third path preview indicator and a fourth path preview indicator, the trajectory adjustment indicator comprising a third trajectory adjustment indicator, the third path preview indicator corresponds to the third trajectory adjustment indicator, and the target operation mode is the repeated traversal mode; and
the receiving the trigger information generated in response to the preset trigger operation performed by the external object on the trajectory adjustment indicator, the adjusting the initial path preview indicator based on the trigger information to obtain the target path preview indicator, and the displaying the target path preview indicator on the operation interface comprising:
receiving third trigger information generated in response to a third preset trigger operation performed by the external object on the third trajectory adjustment indicator, and adjusting the third path preview indicator based on the third trigger information to obtain a third target path preview indicator;
adjusting the fourth path preview indicator to obtain a fourth target path preview indicator based on the third trigger information and preset angle difference;
displaying the third target path preview indicator and the fourth target path preview indicator.

12. The method according to claim 11, wherein the method further comprising:
displaying a fourth trajectory adjustment indicator corresponding to the fourth target path preview indicator;
receiving fourth trigger information generated in response to a fourth preset trigger operation performed by the external object on the fourth trajectory adjustment indicator, adjusting the fourth target path preview indicator based on the fourth trigger information to obtain an updated fourth target path preview indicator, and displaying the third target path preview indicator and the updated fourth target path preview indicator.

13. The method according to claim 6, wherein the initial path preview indicator comprising at least a fifth path preview indicator and a sixth path preview indicator, the trajectory adjustment indicator comprising a fifth trajectory adjustment indicator and a sixth trajectory adjustment indicator, the fifth path preview indicator corresponds to the fifth trajectory adjustment indicator, the sixth path preview indicator corresponds to the sixth trajectory adjustment indicator, and the target operation mode is the repeated traversal mode; and the receiving the trigger information generated in response to the preset trigger operation performed by the external object on the trajectory adjustment indicator, the adjusting the initial path preview indicator based on the trigger information to obtain the target path preview indicator, and the displaying the target path preview indicator on the operation interface comprising:
receiving fifth trigger information generated in response to a fifth preset trigger operation performed by the external object on the fifth trajectory adjustment indicator, and at the same time receiving sixth trigger information generated based on the external object performing a sixth preset trigger operation on the sixth trajectory adjustment indicator;
adjusting the fifth path preview indicator based on the fifth trigger information to obtain a fifth target path preview indicator and displaying the fifth target path preview indicator, and adjusting the sixth path preview indicator based on the sixth trigger information to obtain a sixth target path preview indicator and displaying the sixth target path preview indicator.

14. The method according to any one of claims 9 to 12, wherein the preset angle difference is 90 degrees; or the preset angle difference is obtained based on an angle difference between the initial path preview indicators.

15. The method according to any one of claims 1 to 13, wherein the initial path preview indicator is displayed in the work area indicator.

16. The method according to any one of claims 1 to 13, wherein the method further comprising:
controlling the initial path preview indicator to perform a preset adjustment operation based on a moving trajectory of the trajectory adjustment indicator on the operation interface, and displaying an execution result of the initial path preview indicator performing the preset adjustment operation in real time.

17. The method according to any one of claims 1 to 13, wherein generating the movement path of the mobile robot corresponding to the target path preview indicator comprising:
displaying a path confirmation interface, wherein the path confirmation interface is configured to receive a confirmation operation of the external object;
generating the movement path of the mobile robot corresponding to the target path preview indicator in response to the confirmation operation.

18. The method according to any one of claims 1 to 13, wherein the method further comprising:
displaying an operation information interface, wherein the operation information interface displays operation information of the mobile robot performing an operation in the target work area;
updating the operation information in response to an operation of the external object on the operation information interface or the operation interface;
updating the operation information interface based on the operation information.

19. The method according to claim 18, wherein the operation information comprising at least one of: real area information corresponding to the work area indicator, time-consuming information corresponding to the mobile robot operating in the work area indicator, operation mode information, preset angle difference between the initial path preview indicators.

20. The method according to claim 3 or 4, wherein the preset reference position is a center position of the work area indicator, or the preset reference position is a center position of the operation interface.

21. The method according to claim 6, wherein after generating the movement path of the mobile robot corresponding to the target path preview indicator, the method further comprising:
obtaining at least two target path preview indicators in response to determining the target operation mode being the repeated traversal mode, and
in response to determining that an angle difference between the at least two target path preview indicators is 180 degrees, determining that directions of pieces of path information corresponding to the at least two target path preview indicators are the same as each other or opposite to each other.

22. The method according to claim 1, wherein the operation interface is further provided with a function indicator, and the method further comprising:
after the preset trigger operation is completed, in response to an overlapping area existing between the trajectory adjustment indicator and the function indicator, adjusting a display position of the trajectory adjustment indicator on the operation interface, wherein the display position is on a connection line between a target position corresponding to the trigger information and a preset reference position, and no overlapping area exists between the display position and the function indicator.

23. A terminal device, comprising: a processor and a memory;
the memory configured to store a computer program; and
the processor configured to execute the computer program and, when executing the computer program, implement the method for adjusting a movement path according to any one of claims 1 to 22.

24. A non-transitory computer readable storage medium, wherein the non-transitory computer readable storage medium stores one or more programs, and the one or more programs are executable by one or more processors to implement the method for adjusting a movement path according to any one of claims 1 to 22.
